Europäisches Patentamt

European Patent Office

Office européen des brevets

(19)

(11) Numéro de publication: **0 003 493 B2**

## NOUVEAU FASCICULE DE BREVET EUROPEEN

(12)

(45) Date de publication du nouveau fascicule du brevet: 22.05.85

(51) Int. Cl.⁴: **H 04 L 11/16**

(21) Numéro de dépôt: 78430021.2

(22) Date de dépôt: **08.12.78**

(54) Système de transmission de données entre des stations connectées en boucle.

(30) Priorité: **27.01.78 US 872853**

(43) Date de publication de la demande: **22.08.79 Bulletin 79/17**

(45) Mention de la délivrance du brevet: **17.03.82 Bulletin 82/11**

(45) Mention de la décision concernant l'opposition: **22.05.85 Bulletin 85/21**

(84) Etats contractants désignés: **DE FR GB**

(56) Documents cités:
CH - A - 550 521
CH - A - 584 492
DE - A - 2 644 616
FR - A - 2 172 718
FR - A - 2 379 953
FR - A - 2 386 211
GB - A - 1 510 462
US - A - 4 019 176
US - A - 4 042 783
US - A - 4 064 486

1974 INTERNATIONAL ZURICH SEMINAR ON DIGITAL COMMUNICATIONS, 12 à 15 mars 1974, New York WANET "Distributed control loops for data transmission in electrical centralised control systems" pages D1(1) à D4(5)
1974 INTERNATIONAL ZURICH SEMINAR ON DIGITAL COMMUNICATIONS 12 à 15 mars 1974, New York HAFNER: "Digital communication loops - a survey" pages D1(1) à D1(7)

(73) Titulaire: **International Business Machines Corporation, Old Orchard Road, Armonk, N.Y. 10504 (US)**

(72) Inventeur: **Barner, Robert Paul, 10500 Rockville, Rockville, Maryland 20852 (US)**
Inventeur: **Gulick, Anne McAfee, Satellite Business Systems 8003 Westpark Drive, McLean, VA 22102 (US)**
Inventeur: **DeVeer, John Anton, RR2-127, Verbank Road, Millbrook New York 12545 (US)**
Inventeur: **Oblonsky, Jan Gustav, 3005, Qual Hollow Terrace, Brookeville, Maryland 20729 (US)**

(74) Mandataire: **Bonneau, Gérard et al, Compagnie IBM France Département de Propriété Industrielle, F-06610 La Gaude (FR)**

(56) Documents cités: (suite)
1976 INTERNATIONAL ZURICH SEMINAR ON DIGITAL COMMUNICATIONS, 9 à 11 mars 1976 Long Beach HAFNER: "Enhancing the availability of a loop system by meshing" pages D4.1 à D4.5
WUSHOW CHOU: "Computer communication networks - The parts make up the whole" pages 118 à 128
IBM TECHNICAL DISCLOSURE BULLETIN, vol. 19, no. 1, juin 1976, New York ABRAHAM et al.: "Data loop architecture using transmit-receive pairs" pages 146 à 151
INSTITUTE OF ELECTRICAL AND ELECTRONICS ENGINEERS 1974 INTERNATIONAL CONFERENCEON COMMUNICATIONS, 17 à 19 juin 1974, New York FRASER: "Spider - an experimental data communications system" pages 21F-1 à 21F-10

ACTORUM AG

## Description

Domaine Technique

La présente invention concerne de façon générale de domaine de la transmission des signaux
d'information et plus particulièrement un système de transmission de données numériques
entre des stations connectées en série selon une
configuration en boucle ne requérant pas d'unité
de commande principale et assurant une communication mémoire-à-mémoire entre des processeurs rattachés aux stations de la boucle.

Etat de la technique antérieure

Il existe à l'heure actuelle des systèmes à multiprocesseurs, qui assurent la communication
entre processeurs dans un mode canal dans lequel les lignes et les liaisons entre les processeurs sont contrôlées par une unité de commande entrée/sortie. Cet agencement requiert des lignes importantes pour la commande de liaison et
la transmission des données entre deux processeurs quelconques. Les brevets des E.U.A. nos
4 014 005 et 3 916 380 décrivent des systèmes
classiques qui assurent ce mode de communication par canal entre processeurs.

Pour certaines applications, la configuration en
boucle dans laquelle un conducteur commun
connecte les unités rattachées, présente certains
avantages par rapport au mode canal. Cet agencement assure une plus grande souplesse de
l'ensemble par le fait qu'il permet à un processeur d'être rattaché à la boucle pour communiquer avec n'importe quel autre processeur rattaché à la boucle.

Certains systèmes actuels de communication
en boucle entre processeurs utilisent une unité
de commande principale rattachée à la boucle
pour diriger les communications entre tous les
processeurs rattachés. Les fonctions de commande sont assurées par l'utilisation de lignes de
commande separées sur la boucle, de techniques
d'appel entre processeurs sur la boucle pour diriger la transmission, et d'un protocole d'établissement de liaison. Le brevet no 70 36299 déposé en
France par la demanderesse le 28 septembre 1970
et, les brevets des E.U.A. nos 3 659 271, 3 876 838,
3 879 710, 3 883 693 et 4 002 842, décrivent des systèmes en boucle classique avec unité de commande séparée.

D'autres systèmes de communication en
boucle utilisent un format à tranches de temps
fixe pour la synchronisation entre les processeurs
rattachés. Cette technique alloue une tranche de
temps spécifique à chaque processeur sur la
boucle pour la transmission ou la réception des
données. Les systèmes de ce type sont limités en
vitesse et en capacité par (i) l'attribution des tranches de temps aux processeurs qui n'ont pas de
données à communiquer à cet instant particulier,
et (ii) interverrouillage de l'unité principale qui
génère les trames de temps. Les brevets des
E.U.A. noos 3 483 329, 3 544 976 et 3 775 789 décrivent chacun un système de communication à
trames de temps fixes.

On peut trouver une approche des différents
systèmes utilisés dans l'article «Computer Communication Networks – The parts make up the
whole» paru dans AFIPS Conference Proceedings en mai 1975. Cet article passe en revue les
architectures possibles de réseaux composés de
calculateurs et de terminaux, les équipements de
transmission utilisés dans de tels réseaux ainsi
que les procédures à metre en jeu.

Un inconvénient des systèmes en boucle provient du fait qu'une station peut être défectueuse
ou tomber en panne. Dans ce cas la boucle peut
se trouver coupée et les transmission ne peuvent
plus être effectuées entre deux stations de part et
d'autre de la station défectueuse. Lorsque ceci se
produit il faut que la station puisse être court-circuitée par la boucle de sorte que les transmissions entre les autres stations ne soient pas perturbées. Ceci est décrit dans l'article «Distributed
Control Loops for Data Transmission in Electrical
Centralized Control Systems» par Wanet paru
dans «International Zurich Seminar on Digital
Communications» en 1974 où le système comprend une unité centrale transmettant une commande de dérivation de la station défectueuse
après détection de l'absence de transmission
pendant un certain temps. Mais dans le cas d'une
station défectueuse, l'inconvénient provient principalement du fait que cette station peut continuer à transmettre des données erronées sur la
boucle. Cet inconvénient a été réduit par le système décrit dans l'article «Enhancing the Availability of a Loop System by Meshing» par Hafner paru
dans «International Zurich Seminar on Digital
Communications» de 1976. Le système décrit
comporte, en plus des lignes de transmission reliant les stations en boucle, deux groupes secondaires de lignes de transmission court-circuitant
une station sur deux. Ainsi le premier groupe relie
entre elles toutes les stations d'ordre pair alors
que le deuxième groupe relie toutes les stations
d'ordre impair. Cette configuration permet à toute station qui détecte que la station précédente
est défectueuse de se connecter sur les lignes de
transmission en provenance de la station située
en amont de la station défectueuse.

Mais il peut quand même arriver que des messages erronés circulent sur la boucle, ce qui amènerait un embouteillage. Une solution partielle
est de compter le nombre de fois qu'un message
passe par une station, et de l'annuler s'il est passé un nombre de fois déterminé, comme cela est
décrit dans US-A-4 019 176.

Exposé de l'invention

D'après ce qui précède, l'objet de la présente
invention est de fournir un système de transmission de données à multiprocesseurs amélioré à
cet égard dans lequel chaque processeur est associé à une station connectée à d'autres stations
associées à d'autres processeurs correspondants
et agencées selon une configuration en boucle.

Ceci a été atteint dans un système selon le préambule de la revendication 1 par les moyens selon la partie caractérisante de la revendication 1, en particulier par des moyens permettant d'annuler des messages (ou trames de données) sans adresse valable.

La transmission des données entre les stations de la boucle est assurée par des trames de données d'une station quelconque vers une autre station quelconque dans un sens autour de la boucle.

Le système selon l'invention comporte une pluralité de stations connectées selon une configuration en boucle unidirectionnelle dans lequel chaque station comporte: une première mémoire intermédiaire pour emmagasiner les données de la station à transmettre sur la boucle à une autre station, une deuxième mémoire intermédiaire pour emmagasiner les données destinées à la station, une troisième mémoire intermédiaire pour emmagasiner temporairement les données reçues sur la boucle et destinées à une autre station pendant le temps où la station est occupée à transmettre des données vers une autre station, un moyen de génération de signaux d'horloge pour engendrer des impulsions d'horloge transmises vers la station suivante, en réponse aux impulsions d'horloge en provenance de la station précédente, des moyens de détection pour détecter la présence de données à l'entrée de la station sur lesdites lignes de données et une unité de commande pour commander la réception de données à destination de la station dans ladite deuxième mémoire intermédiaire, la transmission sur la boucle des données emmagasinées dans ladite troisième mémoire intermédiaire, et la transmission sur la boucle des données en provenance de la station emmagasinées dans ladite première mémoire intermédiaire à partir de la détection par lesdits moyens de détection de la première impulsion d'horloge qui suit l'impulsion d'horloge pendant laquelle aucune donnée n'a été détectée à l'entrée de la station.

Un bus principal connecte toutes les stations en série et un premier bus dit alterné connecte toutes les stations d'ordre pair alors qu'un deuxième bus alterné connecte toutes les stations d'ordre impair. Chaque station comporte un commutateur à deux états, le premier état permettant la connexion du bus principal et du premier ou du deuxième bus alterné à la station par l'intermédiaire d'un ensemble de porte; le deuxième état permettant la déconnexion des bus principal et alterné et l'«évitement» de la station par lesdits bus.

Les trois différents types de trames qui peuvent être transmis sur la boucle sont les trames d'information, les trames de réponse et les trames nulles. La trame d'information contient les données transmises de processeur à processeur et est transmise autour de la boucle entre les deux stations connectées aux processeurs. La trame de réponse est envoyée comme une réponse à partir de la station qui reçoit la trame d'information pour indiquer à la station qui a transmis la trame d'information que cette trame a été reçue. La trame nulle est transmise pendant tout le temps où il n'y a pas de transmission de trames d'information ou de réponse. La reconnaissance d'une trame nulle par une station quelconque sur la boucle constitue une indication que la boucle est disponible pour être utilisée.

Les trames d'information et les trames de réponse contiennent l'adresse de la station émettrice et de la station réceptrice. Chaque station sur la boucle examine toutes les trames lorsqu'elles passent autour de la boucle et en se basant sur l'adresse de la trame, transfère la trame à la station suivante sur la boucle ou emmagasine celle- ci pour transmission au processeur rattaché à cette station.

Chaque station a la possibilité, lorsqu'elle examine les trames passant autour de la boucle, de retirer celles qui contiennent des erreurs d'adresse ou des erreurs de parité. De cette manière, les trames qui présentent des adresses de station incorrectes ne passeront pas continuellement autour de la boucle à la recherche de stations n'existant pas. Chaque station a également la possibilité d'effectuer des opérations d'évitement qui permettent de diriger des trames à la station suivante sans passer au travers d'une station qui n'est pas en fonctionnement ou qui fonctionne dans un mode défectueux.

Chaque station a la possibilité de placer des données reçues d'un processeur en format de trame pour transmission sur la boucle à une autre station. Chaque station a également la possibilité de prendre une trame reçue d'une autre station sur la boucle et de convertir les données reçues dans un format de trame en un format approprié pour transmission au processeur.

On voit donc que, par rapport à l'état de la technique antérieure, le système de l'invention a l'avantage de permettre les communications simultanées entre les processeurs associés aux stations de la boucle sans avoir recours à une unité de commande principale. En outre le système permet à toute station de pouvoir rejeter les trames de données à adresse erronée, et permet également l'évitement automatique d'une station défectueuse sur la boucle.

Les caractéristiques et avantages de la présente invention ressortiront mieux de la description qui suit, faite en référence aux dessins annexés à ce texte, qui représentent un mode de réalisation préféré de celle-ci.

Brève description des figures

La figure 1 est une représentation schématique du système de transmission de données selon la présente invention.

La figure 2 est un bloc-diagramme d'une station.

La figure 3 est un bloc-diagramme de l'unité d'interface de boucle.

La figure 4 est un bloc-diagramme de l'interface de processeur.

La figure 5 est un bloc-diagramme de l'unité de commande de chaque station.

La figure 6 est une représentation schématique d'une trame d'information.

La figure 7 est une représentation schématique d'une trame de réponse.

La figure 8 est une représentation schématique d'une trame nulle.

La figure 9 est un bloc-diagramme de la mémoire intermédiaire élastique.

La figure 10 est une représentation chronologique d'un exemple de fonctionnement de la mémoire intermédiaire élastique.

La figure 11 est un bloc-diagramme de l'unité de commande d'en-tête.

La figure 12 est une représentation schématique du réseau de commande.

Mode de réalisation préféré de l'invention

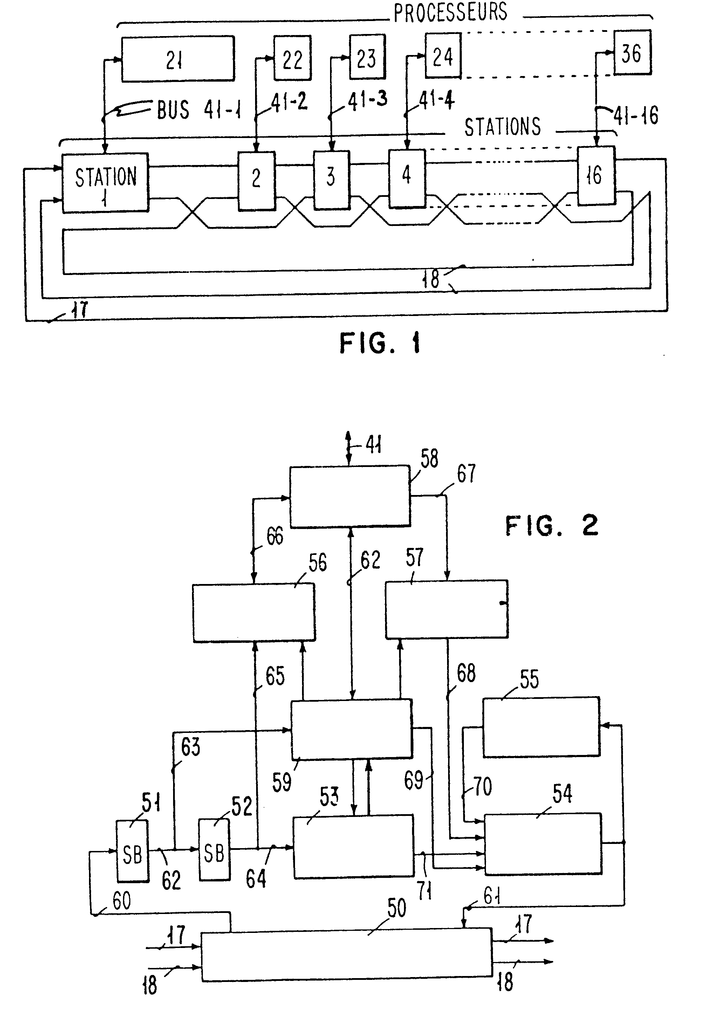

Le système de transmission de données à configuration en boucle est représenté à la figure 1. Les stations 1 à 16 sont agencées en boucle et connectées par le conducteur de boucle 17 et également par un deuxième conducteur 18 connectant une station sur deux. Les processeurs 21 à 36 sont connectés aux stations 1 à 16, respectivement, par des conducteurs entrée/sortie (I/O) individuels respectifs 41-1 à 41-16.

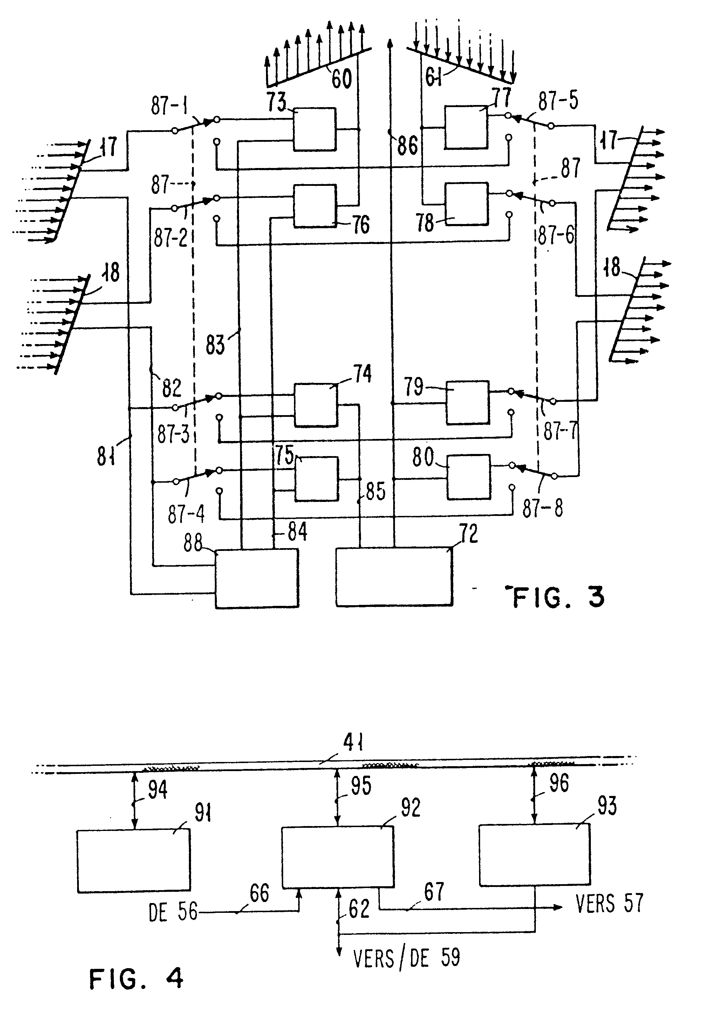

On décrira une station en se reportant à la figure 2. L'unité d'interface de boucle 50 reçoit des trames (qui seront décrites plus en détail ultérieurement) transmises autour de la boucle soit par le conducteur de boucle 17, soit par un des deuxièmes conducteurs de boucle 18 (pendant l'exécution d'une opération d'évitement qui sera décrite ultérieurement). Les trames reçues par l'unité d'interface de boucle 50 sont transférées à une mémoire intermédiaire 51 au moyen du conducteur d'entrée de trames 60. La mémoire 51 est une mémoire intermédiaire à un multiplet qui introduit un retard d'un cycle d'horloge. La mémoire 51 transfère les données à la mémoire 52 qui introduit un retard d'un cycle d'horloge supplémentaire et également à l'unité de commande 59 par la ligne 63. La mémoire intermédiaire 52 transfère les données à la mémoire intermédiaire «elastique» 53 par la ligne 64 et également à la mémoire intermédiaire de réception 56 par la ligne 65. La mémoire intermédiaire de réception 56 contient un réseau de 1 multiplet de large et de 256 multiplets de capacité. Seize ensembles de deux sections consécutives de mémoire intermédiaire de 8 multiplets dans la mémoire intermédiaire de réception 56 sont référencés mémoire «intermédiaire A» et «mémoire intermédiaire B», respectivement. Ces mémoires intermédiaires A et B sont réservées pour les trames reçues sur la boucle avec des adresses indiquant que la trame est destinée à cette station. La mémoire intermédiaire «élastique» 53 qui a une capacité de 16 multiplets est utilisée pour emmagasiner une trame d'information à transférer à la station suivante, ceci pendant la période de temps où le conducteur de sortie de trames 61 est occupé à transmetre des données sur le conducteur de boucle 17. Lorsque le conducteur de sortie de trame 61 a terminé, la mémoire intermédiaire «élastique» 53 transmet la trame par la ligne 71 au travers de la porte de sortie 54 sur le conducteur de sortie de trame 61 et à partir de là, sur le conducteur de boucle 17 vers la station suivante sur la boucle. Chaque multiplet de données dans une trame qui est désignée par une adresse de réception par une station spécifique, par exemple la station 1, est emmagasiné dans la mémoire intermédiaire de réception 56 de cette station, dans la section A ou B appropriée sélectionnée par l'unité de commande 59 selon l'adresse de la station d'origine jusqu'à ce que les 8 multiplets des données entrantes soient emmagasinés. Les données à transmettre au processeur 21 (voir la figure 1) sont transférées de la mémoire intermédiaire de réception 56 par la ligne 66 dans l'interface de processeur 58. Les détails du transfert des données vers et à partir de l'interface de processeur 58 seront décrits par la suite en se reportant à la figure 4. L'interface de processeur 58 reçoit des donées du processeur 21 par le conducteur entrée/sortie 41 et transmet ces données à la mémoire intermédiaire d'émission 57 par la ligne 67. La taille et la structure de la mémoire intermédiaire 57 sont les mêmes que celles de la mémoire intermédiaire de réception 56. De plus, l'information de commande est transférée de l'interface de processeur 58 à l'unité de commande 59 par une ligne 62. Des trames issues de la porte de sortie 54 sont transférées sur le conducteur de sortie de trame 61 et également transmises au générateur de caractères de vérification 55 qui génère un caractère de vérification de redondance longitudinale pour chaque trame et transfère ce caractère de vérification au conducteur de sortie de trame au moyen de la ligne 70 et de la porte de sortie 54.

En se reportant à la figure 3, on décrira l'unité d'interface de boucle 50 (voir également la figure 2) qui assure la fonction entrée trame/sortie trame, la fonction «évitement» et la fonction de génération d'horloge.

Les conducteurs de boucle 17 et 18 comprennent chacun dix lignes parallèles, neuf lignes portant des données numériques et une ligne portant des bits d'horloge. En mode normal, les neuf lignes de données du conducteur de boucle 17 sont reçues par une station (par exemple la station 1) au travers des contacts normalement fermés du commutateur d'évitement 87-1 par l'intermédiaire du récepteur de sélection d'entrée 73 et du conducteur d'entrée de trames 60. Les trames à transmettre depuis la station sont envoyées au travers du conducteur de sortie de trames 61, du circuit de commande de sortie 77, des contacts normalement fermés du commutateur d'évitement 87-5 et du conducteur de boucle 17, à l'unité d'interface de boucle suivante. Les trames transmises à partir de la station sont également envoyées au travers du circuit de commande de sortie 78, des contacts normalement fermés 87-6 et du deuxième conducteur de boucle 18. Les signaux d'horloge sur le conducteur de boucle 17 sont transférés au travers des contacts normalement fermés du commutateur d'évitement 87-3 à partir de la ligne 81, au travers du récepteur de sélection d'entrée 74, de la ligne 85, et vers le générateur d'horloge 72. Les signaux d'horloge sont également transférés dans l'unité de détection d'horloge 88 au moyen de la ligne 81.

La fonction d'«évitement» qui peut être assurée en deux modes différents, modifie le cheminement normal des lignes au travers de l'unité d'interface de boucle 50. En bref, dans le premier mode, un commutateur d'évitement mécanique 87 est actionné manuellement à une station particulière (par exemple la station 1), afin de provoquer l'évitement de cette station par le conducteur de boucle 17 et également par le deuxième conducteur de boucle 18, ce qui place effectivement la station dans une condition de non-fonctionnement et provoque l'évitement de cette station par toutes les trames parcourant la boucle. D'autre part, dans le deuxième mode d'évitement, le dispositif d'évitement détecte l'absence de l'information d'horloge transmise à partir de la station précédente (par exemple la station 16) et actionne des portes logiques pour permettre la réception des données à partir du deuxième conducteur de boucle 18 au lieu du conducteur de boucle 17, ce qui provoque effectivement l'évitement de la station précédente.

Dans le premier mode, le commutateur d'évitement mécanique 87 est commuté manuellement si bien que les contacts normalement ouverts sont fermés. En conséquence, les données sur les neuf lignes de données du conducteur de boucle 17 sont transmises au travers des contacts du commutateur 87 de façon à éviter les dispositifs 73 et 77 par le côté sortie du conducteur 17. Le conducteur de boucle est donc direct au travers des contacts normalement ouverts des commutateurs d'évitement 87-1 et 87-5 sans lecture dans la station. Les signaux apparaissant sur la ligne d'horloge 81 évitent également, au travers des contacts normalement ouverts du commutateur d'évitement 87-3, le récepteur de sélection d'entrée 74 et le circuit de sortie 79, par les contacts normalement ouverts 87-7 et sur le conducteur de boucle 17. Le deuxième conducteur de boucle 18 évite également le récepteur de sélection d'entrée 76 le circuit de commande de sortie 78 au travers des contacts normalement ouverts des commutateurs d'évitement 87-2 et 87-6. D'une manière correspondante, la ligne 82, au travers des contacts normalement ouverts des commutateurs d'évitement 87-4 et 87-8, évite le récepteur de sélection d'entrée 75 et le circuit de sortie 80. Dans ce premier mode, le commutateur d'évitement 77 étant actionné, le conducteur de boucle 17 et le deuxième conducteur de boucle 18 comprenant les deux ensembles de lignes d'horloge, passent directement à la station suivante sans lecture dans cette station particulière.

Comme indiqué ci-dessus, le détecteur d'horloge 88 détecte l'absence du signal d'horloge, ce qui fait que dans le deuxième mode, l'opération d'évitement est amorcée automatiquement par le détecteur d'horloge 88 conditionnant logiquement les récepteurs de sélection d'entrée 76 et 75 par la ligne 84 et déconditionnant les récepteurs de sélection d'entrée 73 et 74, par la ligne 83. En d'autres termes, lorsque le détecteur d'horloge 88 ne détecte pas d'impulsions d'horloge à partir d'une station précédente (par exemple la station 16) sur la ligne 81, le détecteur d'horloge 88 active la ligne 84 qui conditionne les récepteurs de sélection d'entrée 76 et 75 et désactive la ligne normalement active 83, ce qui déconditionne les récepteurs de sélection d'entrée 73 et 74. Ceci provoque la lecture des données sur le deuxième conducteur de boucle 18 au travers du récepteur de sélection d'entrée 76, sur le conducteur d'entrée de trames 60 à la place du conducteur de boucle 17 au travers du récepteur de sélection d'entrée 73. Le détecteur d'horloge 88 active également la ligne d'horloge 82 à partir du deuxième conducteur 18 au travers du récepteur de sélection d'entrée 75. Ce mode d'évitement pour la lecture des données à partir du deuxième conducteur de boucle 18 reste en fonction jusqu'à ce que le fonctionnement d'horloge normal soit détecté sur la ligne 81 par l'unité de détection d'horloge 88, ce qui indique que la station précédente (par exemple la station 16) fonctionne à nouveau correctement. A la détection des impulsions d'horloge normales, l'unité de détection d'horloge 88 passe logiquement sa station correspondante en mode normal de lecture de données sur le conducteur de boucle 17.

Le générateur d'horloge 72 est un générateur de boucle à verrouillage de phase présentant les caractéristiques de contre-réaction permettant de générer un nombre entier d'impulsions d'horloge uniformes qui circulent autour de la boucle. Les signaux d'horloge générés par le générateur d'horloge 72 et transmise sur la ligne 86 sont utilisés par le processeur de la station et également par les circuits de commande de sortie 79 et 80 pour activer les lignes d'horloge des conducteurs de boucle 17 et 18. Dans le cas d'une station défectueuse ou d'une mauvaise alimentation, la sortie du générateur d'horloge est désactivée, ce qui provoque le passage de la station suivante sur le deuxième conducteur de boucle sous la commande du détecteur d'horloge 88, comme on vient de le voir précédemment.

En se reportant à la figure 4, on décrira l'interface de processeur 58 (voir également la figure 2) qui assure la connexion d'une station (par exemple la station 1) avec un processeur 21 (voir également la figure 1) pour commander les adressages, assurer les fonctions de commande d'identification pour les programmes d'échange et la transmission aussi bien que la réception des données.

Le processeur décrit dans le brevet des E.U.A. n° 4 038 641 peut être adapté par l'homme de l'art au système à configuration en boucle décrit ici. On se reportera également au brevet des E.U.A. n° 4 038 642.

L'unité de commande d'identification 91 (figure 4) interprète et répond aux lignes d'identification (qui seront décrites ultérieurement) qui commandent le transfert des données et l'interprétation des ordres du processeur à la station par la ligne 94. Le registre de données 92 reçoit ou envoie les donées à partir ou vers le conducteur entrée/sortie 41 (voir également la figure 2) au moyen de la ligne de données 95. Le registre 92 transmet également vers ou reçoit des signaux d'information de l'unité de commande 59 par l'intermédiaire d'une ligne large de deux multiplets 62. Le registre de données 92 assemble deux multiplets de données consécutifs reçus depuis la mémoire intermédiaire de réception 56 de la figure 2 pour leur transmission au processeur et également, sépare deux multiplets reçus du processeur en deux multiplets consécutifs pour leur chargement dans la mémoire intermédiaire d'envoi 57 de la figure 2 et leur transmission par la boucle. Le registre d'adresses 93 par la ligne 96 (figure 4) interprète l'adresse de dispositif de la commande entrée/sortie issue du processeur et envoyée à la station et emmagasine l'adresse de processeur du mot à deux multiplets à transférer vers ou à partir de la mémoire de processeur sous la commande de l'interface de processeur 58.

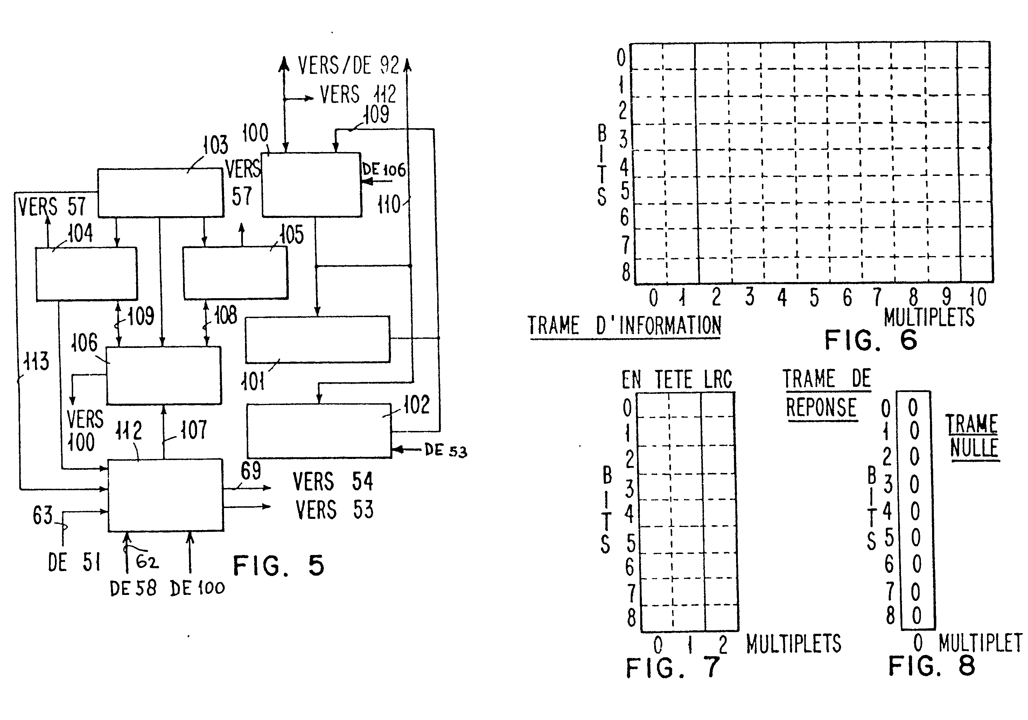

En se reportant à la figure 5, on voit que l'unité 59 (voir également la figure 2) initie et/ou commande toutes les fonctions de la station. Les composants principaux de cette unité sont le réseau de commande 100, l'unité d'incrémentation 101, l'unité de commande de transfert 102, l'unité de balayage 103, l'unité de commande d'envoi 104, l'unité de commande de charge 105, le registre d'adresses 106 et l'unité de commande d'en tête 112. Le réseau de commande 100 (voir également la figure 12) emmagasine les blocs de commande qui commandent les communications entre le processeur et n'importe laquelle des seize stations de la boucle. Un bloc de commande de réception (RDCB) commande la réception des données depuis une station vers son processeur tandis qu'un bloc de commande d'envoi (SDCB) commande l'envoi des données d'un processeur à sa station. Etant donné que le système de la présente invention est décrit en fonction d'une capacité de seize processeurs, le réseau de commande 100 peut donc contenir seize blocs de commande de réception (RDCB) et seize blocs de commande d'envoi (SDCB).

L'entrée et la sortie du réseau de commande 100 sont connectées à l'unité d'incrémentation 101, à l'unité de commande de transfert 102 et au registre de données 92 (voir également la figure 4). Le registre d'adresses 106 est un registre à huit bits indiquant le mot particulier dans le réseau de commande 100 auquel on doit accéder. La sortie du registre d'adresses 106 est également connectée à l'unité de commande d'en-tête 112 par la ligne 107.

L'unité de commande d'envoi 104 qui commande la transmission des données de la station au processeur contient un registre à quatre bits pour emmagasiner le numéro d'une bascule «dispositif prêt à l'envoi», et d'une bascule «dispositif prêt». L'unité de commande de charge 105 qui commande la transmission des données du processeur à la station contient un registre à cinq bits pour emmagasiner le bit charge/décharge et également l'état de la bascule «dispositif prêt à charger/décharger la mémoire intermédiaire» «d'envoi-réception» et «dispositif prêt».

L'unité de balayage 103 contient un registre d'incrémentation dont les cinq bits d'ordre inférieur sont utilisés pour spécifier l'adresse d'un bloc de commande dans le réseau de commande 100 et dont les deux bits supérieurs sont utilisés pour marquer un champ dans le mot de commande de transfert lorsqu'une trame de données est envoyée. Les bits restants sont utilisés pour ajuster d'une manière appropriée la vitesse maximum de changement des bits de marquage de façon que la réponse d'une station à laquelle la trame a été envoyée soit, dans des conditions normales, reçue avant deux changements consécutifs de la configuration des bits de marquage. La sortie à partir des cinq bits d'ordre inférieur de l'unité de balayage 103 est connectée à l'unité de commande d'envoi 104, à l'unité de commande de charge 105 et à la partie des cinq bits supérieurs du registre d'adresses 106.

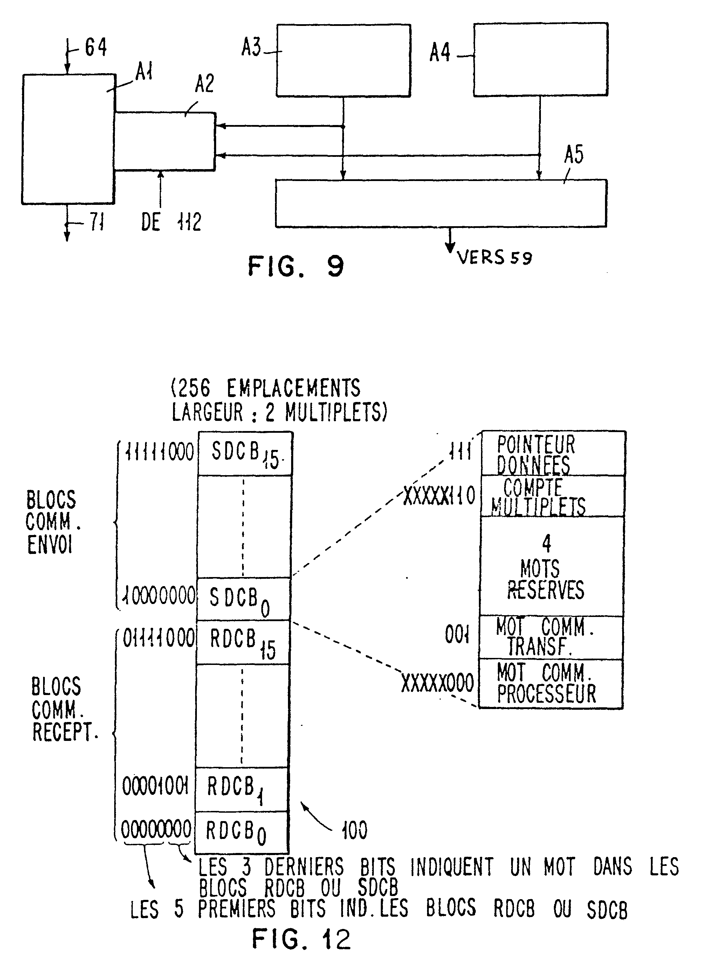

En se reportant à la figure 6, on décrira la trame d'information qui constitue le support de données fondamental entre les stations de la boucle. Par exemple, une trame d'information peut être transmise de la station 1 à la station 4. La station 4 transmet une trame de réponse (figure 7) à la station 1 pour indiquer la réception appropriée de la trame d'information transmise. Des trames nulles sont transmises par chaque station pendant les périodes où aucune autre transmission ne se déroule. Une trame nulle indique donc à une station que la boucle est disponible pour une transmission.

La trame d'information est formée de onze multiplets composés chacun de neuf bits. Les multiplets 0 et 1 constituent la section d'en-tête qui contient l'information d'adresse, les multiplets 2 à 9 contiennent les données et le multiplet 10 contient le caractère de vérification de redondance longitudinal (LCR). L'information particulière contenue dans la trame d'information est la suivante:

Multiplet 0:

    Bit 0 – Réservé.
    Bits 1–4 – Adresse station destination.
    Bits 5–6 – Type de trame = «10» information.
    Bit 7 – Numéro de séquence.
    Bit 8 – Bit de parité impaire.

Multiplet 1:

    Bit 0 – Réservé.
    Bits 1–4 – Adresse de station d'origine.
    Bits 5–6 – Etablis à «11».
    Bit 7 – Similaire au bit 7 du multiplet 0, à l'exception du complément sur la dernière trame.

Bit 8 – Bit de parité impaire.

Multiplets 2–9:

Huit multiplets de données, dernière trame remplie de blancs.

Multiplet 10:

Caractère de redondance longitudinale de parité impaire à 9 bits (LCR).

En se reportant à la figure 7, on décrira maintenant la trame de réponse qui est utilisée pour accuser réception d'une trame d'information à la station de réception. La trame de réponse est composée de trois multiplets de données, les multiplets 0 et 1 contenant l'information d'en-tête et le multiplet 2 contenant le caractère LCR. La trame de réponse contient l'information suivante:

Multiplet 0:

Bit 0 – Réservé.
Bits 1–4 – Adresse de station de destination.
Bits 5–6 – Type de trame = «11» (réponse).
Bit 7 – Numéro de séquence de la trame d'information correspondante.
Bit 8 – Bit de parité impaire.

Multiplet 1:

Bit 0 – Réservé.
Bits 1–4 – Adresse de station d'origine.
Bits 5–6 – Réservés.
Bit 7 – Similaire au bit 7 du multiplet 0.
Bit 8 – Bit de parité impaire.

Multiplet 2:

Caractère de redondance longitudinal de parité impaire à 9 bits (LCR).

On se reportera maintenant à la figure 8 pour décrire la trame nulle qui contient un multiplet composé entièrement de bits zéros. Elle est utilisée pour indiquer à toutes les stations de la boucle qu'aucune transmission de trames d'information ou de trames de réponse ne se déroule et que la boucle est disponible pour être utilisée. Chaque trame d'information et chaque terme de réponse est séparée par une ou plusieurs trames nulles.

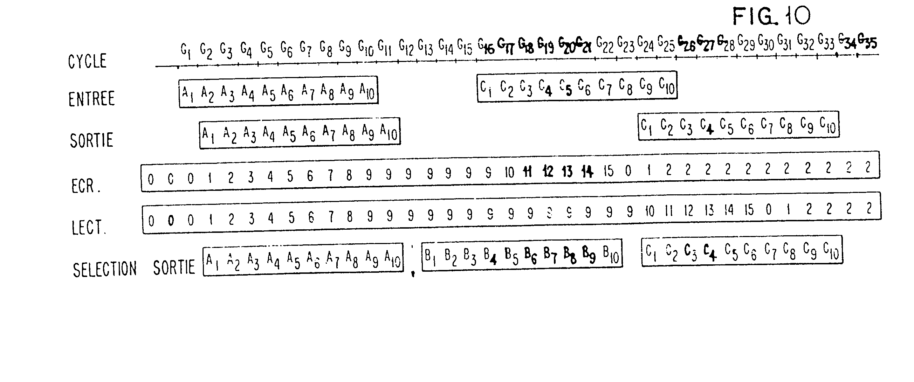

En se reportant à la figure 9, on décrira la mémoire intermédiaire «élastique» 53 (voir également la figure 2) qui fait fonction d'unité d'emmagasinage temporaire pour une trame arrivant à une station sur le conducteur d'entrée de trames lorsque ladite trame est adressée à une autre station de la boucle. Si la station 1 transmet une trame, par exemple la trame B, depuis la mémoire intermédiaire d'envoi 57, par la porte de sortie 54 et sur le conducteur de sortie de trames 61, en même temps qu'une trame adressée à la station 2, par exemple la trame C, arrive sur son conducteur d'entrée de trames 60, la trame C adressée à la station 2 est emmagasinée dans la mémoire intermédiaire 53 jusqu'à ce que la trame B ait été entièrement transmise et que la porte de sortie 54 ainsi que le conducteur de sortie de trames 61 soient disponibles. La trame C est alors trasmise par la mémoire intermédiaire 53 à la porte de sortie 54. La figure 10 qui sera décrite ultérieurement représente la chronologie des opérations de la mémoire intermédiaire 53 pendant l'exécution d'une fonction d'emmagasinage temporaire.

La mémoire intermédiaire élastique 53 contient un réseau A1 de 1 multiplet de large et de 16 multiplets de capacité (voir la figure 9), le registre d'adresses A2, une unité d'incrémentation d'adresses d'écriture à quatre bits A3, une unité d'incrémentation d'adresses de lecture à quatre bits A4 et un comparateur d'adresses lecture/écriture à quatre bits A5. L'entrée de données du réseau A1 est connectée à la deuxième section de la mémoire à un multiplet 52 (voir également la figure 2) tandis que la sortie de données de l'ensemble A1 est connectée à la porte de sortie 54. Les sorties d'adresses à 4 bits des deux unités d'incrémentation d'adresses A3 et A4 sont connectées au registre d'adresses A2 et au comparateur A5.

Le réseau A1 peut écrire un multiplet et lire un multiplet pendant chaque cycle du générateur d'horloge de station, 72 (figure 3). La mémoire intermédiaire 53 est commandée par les signaux de commande «lecture» et «écriture» issus de l'unité de commande 59. Lorsque le réseau A1 est commandé par l'écriture, un multiplet à l'entrée de données 64 est emmagasiné à l'adresse indiquée par l'unité d'incrémentation d'adresses d'écriture A3 et le contenu de A3 est augmenté de un.

Lorsque le réseau A1 est commandé pour la lecture, un multiplet de l'adresse indiquée par l'unité d'incrémentation d'adresse de lecture A4 est lu et placé sur la sortie 71 du réseau A1 et le contenu de l'unité d'incrémentation d'adresse de lecture A4 est augmenté de un. Lorsque les deux signaux de commande «lecture» et «écriture» sont conditionnés, un multiplet est emmagasiné dans le réseau A1 et un multiplet est lu dans celui-ci au cours d'un cycle d'horloge de station et l'unité d'incrémentation d'adresse d'écriture A3 et l'unité d'incrémentation d'adresse de lecture A4 sont augmentées de un. Etant donné que l'unité d'incrémentation d'adresses d'écriture A3 contient l'adresse où le multiplet entrant sera emmagasiné dans le réseau A1 et que l'unité d'incrémentation d'adresse de lecture A4 contient l'adresse où le multiplet suivant sera lu à partir du réseau A1, le rapport existant entre les contenus des unités d'incrémentation A3 et A4 déterminera alors l'importance du retard amené par la mémoire intermédiaire 53. Si les contenus des deux unités d'incrémentation A3 et A4 sont égaux, le même multiplet est emmagasiné, puis lu à partir du réseau A1 au cours de cycles d'horloge successifs. Dans ce cas, la mémoire intermédiaire 53 amène un retard d'un seul cycle entre ses entrées et sorties de données.

Si les contenus de l'unité d'incrémentation d'adresse d'écriture A3 et de l'unité d'incrémentation d'adresse de lecure A4 ne sont pas égaux, mais différent par exemple de k, au cours de l'exécution d'une séquence de cycles de lecture et d'écriture simultanés, un multiplet quelconque à partir de l'entrée de données 64 sera alors emmagasiné dans le réseau A1, puis lu à partir du réseau A1, (k+1) cycles plus tard. La différence k est définie ici comme étant le nombre de cycles que l'unité d'incrémentation d'adresse de lecture A4 doit exécuter afin de rendre son contenu égal au contenu de l'unité d'incrémentation d'adresse d'écriture A3 (si ce dernier demeure constant).

Lorsque la station est soit «restaurée» soit «remise en marche», les contenus des unités d'incrémentation d'adresse d'écriture A3 et d'adresse de lecture A4 sont mis à zéro. Lorsque l'une quelconque des unités d'incrémentation atteint sa valeur maximum par exemple 1111, elle repasse à 0000.

A la fin de chaque cycle, les contenus des unités d'incrémentation d'adresse d'écriture A3 et d'adresse de lecture A4 sont comparés dans le comparateur d'adresse R/W A5 et en cas d'inégalité, un signal est envoyé à l'unité de commande 59 de la figure 2 pour indiquer que la mémoire intermédiaire 53 n'est pas vide.

En se reportant maintenant à la figure 10, on y trouve le schéma chronologique qui représente un instantané de l'activité de la station en trente-cinq cycles consécutifs pendant lesquels deux trames référencées A et C, respectivement, arrivent à la station avant de continuer à circuler, ainsi qu'une trame B qui est créée par la station et transmise par la porte de sortie 54 sur le conducteur de sortie de trames 61 et le conducteur de boucle 17 vers la station suivante. Le schéma de la figure 10 indique les données à l'entrée 64 par la référence «entrée réseau» et la sortie du réseau A1 sur la ligne 71 par la référence «sortie réseau», le contenu de l'unité d'incrémentation d'adresse d'écriture A3 par la référence «écriture adresse», le contenu de l'unité d'incrémentation d'adresse de lecture A4 par la référence «lecture adresse» et les données à la porte de sélection de sortie 54 par la référence «porte sélection sortie». Les conditions d'initialisation avant le premier cycle d'horloge G1 ont restauré les adresses de lecture et d'écriture dans les unités d'incrémentation A4 et A3, respectivement, à zéro, et tous les circuits de données ne présentent pas de signaux. Au cours du cycle G1, le premier multiplet $A_1$ de la trame A apparaît à l'entrée du réseau pour être emmagasiné à l'adresse zéro et l'adresse d'écriture est augmentée de 1. Au cours du cycle suivant, G2, ce multiplet est lu à partir de l'adresse 0 à la porte de sélection de sortie. Au cours du même cycle G2, le multiplet suivant A2 est emmagasiné à l'adresse 1 et l'adresse d'écriture est incrémentée à deux. Ce procédé se poursuit jusqu'au cycle $G_{11}$, lorsque le dernier multiplet $A_{10}$ de la Trame A a été envoyé à la porte de sélection sortie et que les adresses d'écriture et de lecture ont été incrémentées à 9. Supposons que pendant le passage de la trame A, une trame B devienne prête à être envoyée par cette station à partir de la mémoire intermédiaire d'envoi 57. Etant donné qu'il n'y a pas d'autres trames arrivant à l'entrée réseau, la trame B est transmise après un multiplet vide suivant la fin de la trame A, par la porte de sélection de sortie au cours des cycles $G_{12}$ à $G_{22}$. Tandis que la trame B est transmise, une autre trame C arrive à l'entrée du réseau et est emmagasinée dans le réseau A1 aux adresses d'écriture 9 à 2. C'est seulement après que toute la trame B ait été envoyée, que la trame C est lue et envoyée au travers de la porte de sélection de sortie au cours des cycles $G_{24}$ à $G_{33}$. Finalement, les deux adresses de lecture et d'écriture sont à nouveau égales, indiquant une mémoire intermédiaire vide. Il est évident que tandis que la trame A a traversé la mémoire intermédiaire 53 avec un retard de un cycle $G_1$ à $G_2$, la trame C a été retardée de huit cycles $G_{16}$ à $G_{24}$. L'importance du retard appliqué par la mémoire intermédiaire 53 est commandée par la différence de temps (en cycles) entre le commencement du déroulement des procédures d'écriture et de lecture du réseau A1.

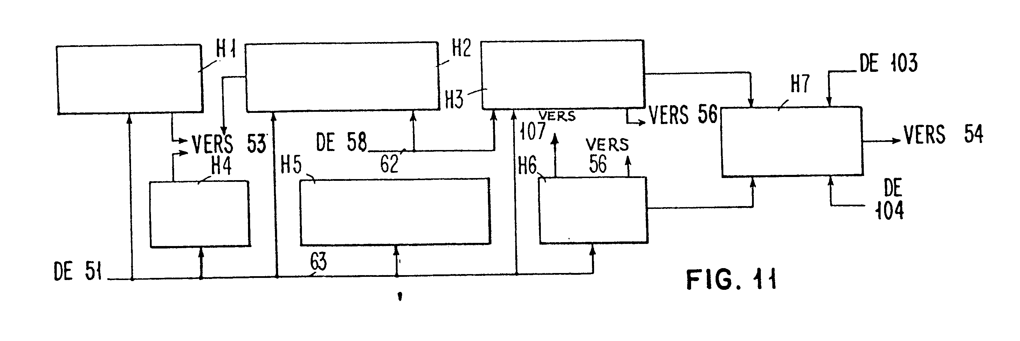

En se reportant à la figure 11, on décrira l'unité de commande d'en-tête qui comprend une unité de contrôle et de comptage de multiples H1, un registre et comparateur d'adresses de boucle H2, un registre et comparateur d'adresses locales H3, une unité de vérification de parité de multiplets H4, un générateur et comparateur de caractères de vérification H5, et un registre d'origines H6. L'unité de commande contient également un compilateur d'en-tête H7 dont la sortie est raccordée à la porte de sortie 54 (voir la fig. 2).

L'unité de contrôle et de comptage de multiplets H1 contient des circuits assurant les fonctions suivantes:

a) La reconnaissance d'une trame nulle – d'un multiplet formé de huit zéros et du zéro parité.

b) La reconnaissance du premier multiplet non vide suivant un multiplet vide en tant que premier multiplet d'une trame.

c) Le démarrage du compteur par le premier multiplet non vide d'une trame et l'arrêt de celui-ci par le premier multiplet vide rencontré. Ce compteur est utilisé pour identifier les multiplets individuels de la trame.

d) L'examen du champ de type de trame (FT) de la trame entrante et la reconnaissance d'une trame d'information ou d'une trame de réponse ou d'une trame nulle.

e) La comparaison du type de trame reconnu et de l'état du compteur après le dernier multiplet d'une trame. Si l'état du compteur (c'est-à-dire la longueur de la trame) n'est pas celui attendu pour le type de trame reconnu, la trame est erronée et rejetée (si elle est adressée à cette station), ou tronquée au multiplet quittant la mémoire 52 si la trame est passée à la station suivante.

Le registre et comparateur d'adresses de boucle H2 est composé d'un registre à quatre bits préchargé avec l'adresse de boucle maximum (MRA) et de circuit assurant les fonctions suivantes:

a) La comparaison de l'adresse de destination (DA) trouvée dans le premier multiplet d'une trame entrante avec MRA et, si DA > MRA, le rejet de la trame.

b) La comparaison de l'adresse d'origine (OA) trouvée dans le deuxième multiplet d'une trame entrante et, si OA > MRA, le rejet de la trame.

Le registre et comparateur d'adresses local H3 consiste en un registre à 4 bits préchargé avec l'adresse de station de boucle locale (LRA), et en circuits assurant les fonctions suivantes:

a) La comparaison de l'adresse de destination DA trouvée dans le premier multiplet d'une trame entrante avec le LRA, et si DA = LRA, l'interception de la trame entrante par cette station dans la mémoire intermédiaire de réception 56, ou si DA ≠ LRA, le passage de la trame entrante à la station suivante.

b) La comparaison de l'adresse d'origine OA trouvée dans le deuxième multiplet d'une trame entrante avec le LRA, et si OA = LRA et si DA ≠ LRA, le rejet de la trame.

L'unité de vérification de parité de multiplets H4 vérifie la parité impaire de tous les multiplets non vides. Si une erreur de parité est trouvée dans les multiplets d'adresse qui constituent les deux premiers multiplets d'une trame ou dans n'importe quel multiplet de données d'une trame adressée à la station, la trame est rejetée. Si une erreur de parité est trouvée dans n'importe quel multiplet sauf dans les deux premiers multiplets d'adresse d'une trame en circulation, la trame est tronquée au multiplet quittant la mémoire 52.

Le générateur et comparateur de caractères de vérification H5 examine tous les multiplets à l'exception du dernier multiplet d'une trame, calcule le caractère de vérification de redondance longitudinal en utilisant les mêmes règles que le générateur de caractères de vérification 55 (voir également la fig. 2) et compare le caractère de vérification calculé avec celui trouvé dans le dernier multiplet de la trame examinée précédemment. Si les caractères de vérification ne sont pas égaux, la trame est rejetée si elle est adressée à cette station, ou tronquée au multiplet quittant la mémoire 52 si la trame est transférée à la station suivante de la boucle.

Le registre d'origine H6 est un registre à 4 bits qui emmagasine l'adresse d'origine (OA) trouvée dans le deuxième multiplet de la trame interceptée précédemment. Cette adresse (OA) emmagasinée dans le registre d'origine est utilisée pour sélectionner dans le réseau de commande 100 (voir la fig. 5) le bloc de commande associé à la station qui est à l'origine de la trame. Si une trame d'information correcte est reçue, OA est également utilisé pour identifier le segment approprié dans la mémoire intermédiaire de réception 56 et l'adresse de destination de l'en-tête de trame de réponse correspondante, formée par le compilateur d'en-tête H7.

Le compilateur d'en-tête H7 contient des circuits compilant l'en-tête à deux multiplets des trames envoyées par la station. Le contenu du registre d'adresse local dans H3 est utilisé comme adresse d'origine, et l'adresse dans l'unité de commande d'envoi 104 ou dans le registre d'origine H6 est utilisée comme adresse de destination pour les trames d'information ou les trames de réponse, respectivement.

En se reportant à la figure 12, on voit que chacun des seize blocs de commande d'envoi SDCB et des seize blocs de commande de réception RDCB du réseau de commande 100 (fig. 5) contient huit mots consécutifs réservés pour les informations suivantes:

Mot 0 – Mot de commande de processeur.
Mot 1 – Mot de commande de transfert.
Mots 2–5 – Réservés.
Mot 6 – Compte de multiplets.
Mot 7 – Indicateur de données.

Le mot de commande (Mot 0) de processeur contient des informations utilisées par l'interface de processeur 58 (voir également la fig. 1) lors de l'exécution des ordres entrée/sortie de processeur.

L'indicateur de données (Mot 7) indique l'adresse dans la mémoire de processeur où la transmission suivante de deux multiplets de données par le bus entrée/sortie 41 sera emmagasinée ou d'où elle sera extraite.

Le compte de multiplets (Mot 6) indique le nombre de multiplets à transmettre par la commande d'entrée/sortie pour commander l'envoi ou la réception des trames sur la boucle à d'autres stations.

Le mot de commande de transfert (Mot 1) pour un dispositif d'envoi contient des champs suivants:

Bit occupation/repos

Indique que les stations ont été mises en route pour leur utilisation.

Bit de transfert de données

Indique que la station est engagée dans l'envoi de données.

Bit attente/prêt

Indique que la station est en attente d'une trame de réponse.

Compte d'essais

Un champ à trois bits utilisé pour compter le nombre de retransmissions d'une trame. Si une trame de réponse n'est pas reçue après sept transmissions, la station de réception est considérée comme ne fonctionnant pas.

Marque de cycle d'envoi

Un champ à deux bits utilisé pour retenir l'état du champ de marquage de l'unité de balayage 103 au moment où la trame est envoyée comme indicateur de la période de temps pendant laquelle le bit attente/prêt a été dans l'état «attente».

### Bit de numéro de séquence

Ce bit est modifié et reproduit dans l'en-tête de chaque trame de données envoyées par la station. Lorsqu'une trame de réponse est reçue, son numéro de séquence est comparé à ce champ pour assurer une correspondance une à une des trames d'information et des trames de réponse.

### Un bit de compte zéro

Ce bit est utilisé pour indiquer que la valeur du compte de multiplets dans le bloc de commande d'envoi a atteint zéro.

### Mémoire intermédiaire A/B pleine

Ce champ à deux bits indique que la mémoire intermédiaire d'envoi correspondante A ou B a été remplie.

### Pointeur de registre de mémoire intermédiaire pleine

Un champ à 4 bits qui indique les deux multiplets de la mémoire intermédiaire de la station qui doivent être chargés ensuite, à partir du processeur, pendant le chargement de la mémoire intermédiaire d'envoi. Le bit d'ordre le plus élevé du pointeur de registre de mémoire intermédiaire pleine est également utilisé pour indiquer la mémoire intermédiaire qui doit effectuer l'envoi suivant si les deux mémoires intermédiaires A et B sont pleines.

Le mot de commande de transfert pour un dispositif de réception contient les mêmes champs qu'un mot de commande de transfert pour un dispositif d'envoi à l'exception du bit de numéro de séquence utilisé par les stations de réception pour vérifier la séquence appropriée des trames reçues et du compte d'essais et de la marque de cycle d'envoi, qui sont éliminés et remplacés par cinq bits réservés.

Avant que les communications puissent se dérouler entre les processeurs rattachés aux stations de la boucle, une procédure d'initialisation doit être effectuée entre chaque processeur et la station rattachée, par exemple, le processeur 21 et la station 1. Par une série de commandes qui seront décrites en détail par la suite, le processeur 21 emmagasine des blocs de commande (fig. 12) dans le réseau de commande 100 de la station 1 qui spécifient par adresse de station l'autre station ou les autres stations (par exemple la station 3) qui peuvent envoyer des données à la station 1.

L'initialisation de la réception de données va maintenant être décrite. Chaque processeur, (par exemple le processeur 21), rattaché à une station de la boucle établit lequel ou lesquels des autres processeurs rattachés à une station ou à des stations de la boucle est ou sont autorisé(s) à transmettre des données au processeur 21. Cette opération est effectuée par le processeur 21 qui emmagasine un bloc de commande de réception séparé (RDCB) dans l'ensemble de commande 100 de la station 1 pour chaque station sélectionnée. Chaque bloc RDCB (fig. 12) emmagasiné dans le réseau de commande 100 indique l'adresse d'une station particulière par la zone où il est emmagasiné. Etant donné que ce système comporte seize stations, il y a jusqu'à seize blocs RDCB dans le réseau de commande. La sélection d'un processeur (par exemple le processeur 22) pour la transmission de données au processeur 21 est effectuée par le processeur 21 qui emmagasine le bloc $RDCB_1$ dans la zone du réseau de commande 100 attribuée à la station 2 rattachée au processeur 22.

Cet emmagasinage de données à des adresses de blocs de commande est effectué par chaque processeur (par exemple le processeur 21) en délivrant des commandes de démarrage individuelles à la station rattachée 1. La commande «démarrage AAA 0 XXXX» contient l'adresse à 3 chiffres entrée/sortie du processeur AAA de la station rattachée, « 0.» qui indique un ordre d'initialisation de réception, et une adresse à quatre chiffres XXXX d'une zone RDCB particulière (par exemple 1111) pour $RDCB_{15}$ attribuée à la station 16 (voir la fig. 12). Les données emmagasinées dans $RDCB_{15}$ du réseau de commande 100 dans la station 1 par le processeur 21 comprennent l'indicateur de données, le compte de multiplets, le mot de commande de transfert et le mot de commande de processeur correspondant à la station 16 rattachée au processeur 36.

Outre le chargement des blocs RDCB particuliers par le processeur, on effectue le chargement d'une adresse de station attribuée (0 à 15 représentant les stations 1 à 16, respectivement) dans le registre d'adresses locales H3 de la commande d'en-tête (fig. 11). L'adresse de boucle maximum qui est 15 dans ce cas, est chargée dans le registre d'adresses de boucle H2.

L'initialisation entre le processeur et sa station correspondante pour l'émission est similaire à l'initialisation pour la réception.

La commande est la suivante: «démarrage AAA 1 XXXX». Les lettres AAA indiquent la station adressée par le processeur. Le chiffre 1 indique que la commande d'initialisation concerne une opération d'émission. Les lettres XXXX contiennent l'adresse qui spécifie un bloc de commande d'envoi particulier (SDCB) dans le réseau de commande comme représenté dans la figure 12, par exemple $(SDCB_0)$ à $(SDCB_{15})$ pour les stations 1 à 16, respectivement. L'initialisation charge donc un bloc de commande particulier (de $SDCB_0$ à $SDCB_{15}$) du réseau de commande 100 de la figure 12 avec le mot de commande de processeur, le mot de commande de transfert, le compte de multiplets et l'indicateur de données pour chaque commande de démarrage.

Après l'initialisation de toutes les stations par les processeurs rattachés, chaque station de la boucle assure une fonction de balayage pour commander l'envoi et la réception des données entre les stations de la boucle. L'unité de balayage 103 (voir la fig. 5) génère les 16 adresses par incrémentation et transmet en série les adresses au registre 106. Le registre d'adresses 106 conditionne la lecture d'un bloc de commande particulier dans le réseau de commande 100 désigné par la fonction de balayage. Le mot de commande de transfert (TCW) qui est le mot 001 du bloc de commande (voir la fig. 12), est transmis à l'unité de commande de transfert 102 (voir également la fig. 5). La commande de transfert 102 vérifie la condition de tous les champs du mot TCW et interprète à partir des bits dans chaque champ décrit à la figure 12, la fonction qui sera exécutée. Pendant l'opération d'émission, des données doivent être chargées du processeur à la mémoire intermédiaire 57 (voir également la fig. 2). L'unité de commande de charge 105 reçoit l'adresse, à partir de l'unité de balayage 103, du bloc de commande qui est adressé et indique la réception des données issues du processeur au travers du registre de données 92 (voir également la fig. 4) et passées dans la mémoire intermédiaire d'envoi 57 (fig. 2). L'unité de commande de charge 105 passe par des cycles continus d'acceptation des données à partir du processeur et de mise à jour du mot TCW, de l'indicateur de données et du compte du multiplet dans le bloc de commande (fig. 12). L'opération de chargement de données du processeur à la station de boucle est terminée par le bit de mémoire intermédiaire pleine du mot TCW indiquant un état complet de la section attribuée de la mémoire intermédiaire 57 ou par le compte de multiplets revenant à zéro. A ce point, la station de boucle a accepté les données du processeur rattaché pour transmission sur la boucle à une autre station désignée par l'adresse du bloc de commande SDCB. Une bascule «dispositif prêt» de station dans l'unité de commande d'envoi 102 (fig. 5) est conditionnée.

Le conditionnement de la bascule de «dispositif prêt» indique qu'il y a des données disponibles dans la station pour être transmises sur la boucle à une autre station. La station d'envoi place l'information dans le format de trame d'information (fig. 6) pour sa transmission sur la boucle. La transmission par la station peut se dérouler lorsqu'il n'y a pas de trame dans la mémoire intermédiaire 53 (voir également la fig. 2).

Les deux premiers multiplets de la trame d'information constituent l'information d'en-tête et sont compilés dans l'unité de commande d'en-tête 112 de la figure 11. L'information d'en-tête contient l'adresse de la station d'origine et l'adresse de la station de destination. Cette information est transmise par le compilateur d'en-tête d'envoi H7 (voir également la fig. 11) à la porte de sortie 54 (voir également la fig. 2), où elle est transmise par le conducteur de sortie de trames 61 au conducteur de boucle 17. En se reportant à la figure 6 et en suivant l'information d'en-tête, on voit que les informations de données formées des multiplets 2 à 9 de la trame d'information sont transmises de la mémoire intermédiaire d'envoi 57 (voir également la fig. 2) au travers de la porte de sortie 54 et du conducteur de sortie de trame 61, au conducteur de boucle 17. Le multiplet de caractère de vérification 10 qui est basé sur le compte impair-pair des multiplets de données est ajouté à la trame d'information à la suite du multiplet 9 par le générateur de caractères de vérification 55 au travers de la porte de sortie 54 et par le conducteur 17. Le mot TCW dans un bloc de commande (voir la fig. 12) est mis à jour pour indiquer le dernier état de la mémoire intermédiaire et le bit attente/prêt est conditionné sur «attente». Ceci achève la transmission d'une trame d'information sur la boucle par une station.

La trame d'information progresse autour de la boucle passant d'une station à une autre jusqu'à ce que l'adresse de la station de destination dans l'en-tête soit reconnue par l'unité de commande d'en-tête 112 (voir également la fig. 5) de la station de destination. La reconnaissance de l'adresse de destination est assurée par le registre et comparateur d'adresses locales H3 (voir également la fig. 11) qui compare l'adresse de destination de la trame d'information à l'adresse locale de la station. Une égalité indique la station particulière comme unité de réception de la trame d'information. Le mot TCW de la station de réception indiqué par le registre d'origine H6 est lu et emmagasiné dans le registre de mot TCW 102. Les huit multiplets de données sont emmagasinés dans la mémoire intermédiaire de réception 56 (voir également la fig. 2). L'unité de contrôle et le comptage de multiplets H1 reconnaît la fin de la trame et indique au compilateur d'en-tête d'envoi H7 qu'il doit transmettre une trame de réponse à l'unité émettrice pour indiquer la réception appropriée de la trame d'information transmise dans le cas où aucune erreur n'a été détectée.

La structure de la trame de réponse (fig. 7) comprend une information d'en-tête dans les multiplets 0 et 1 et un multiplet de caractère de vérification 2. Si la trame de réponse n'arrive pas à la station d'origine, compte tenu du temps compté par le mot TCW comme indiqué par le bit attente/prêt et les bits de marquage, la trame d'information transmise est considérée comme n'étant pas reçue par la station de destination et une retransmission de la trame d'information complète se déroule. Lorsqu'une trame de réponse est reçue à la station d'origine, le mot TCW est mis à jour en passant le bit attente/prêt de l'état «attente» à l'état «prêt», et en mettant à jour le bit de séquence et le bit de mémoire intermédiaire complète approprié. Si le bit de mémoire intermédiaire complète est déconditionné, la mémoire intermédiaire peut être remplie avec des données supplémentaires.

Sous la commande de l'unité de balayage 103 (fig. 5) balayant les adresses des blocs de commande, le mot TCW du bloc de commande de la station de réception est adressé par le registre d'adresses 106, lu par l'unité de commande de transfert 102 et le bit de mémoire intermédiaire complète «conditionné» indique que la mémoire intermédiaire de réception 56 (voir également la fig. 2) a des données à transmettre au processeur rattaché. Le bloc de commande de réception emmagasiné initialement par le processeur pendant la procédure d'initialisation indique dans l'indicateur de données (fig. 12) la zone d'emmagasinage du processeur prévue pour la réception des données. La transmission des données depuis la mémoire intermédiaire de réception 56 vers le processeur se déroule au travers du registre de données 92 (voir également la fig. 4) de l'interface de processeur sous la commande de l'interface de processeur 58.

Les trames qui sont reconnues par une station quelconque comme présentant une adresse irrégulière sont retirées de la boucle. Cette fonction est assurée par l'unité de commande d'en-tête (fig. 11) par comparaison des adresses d'en-tête entrantes à l'adresse de boucle maximum fournie par le registre d'adresses de boucle H2. Toute adresse qui se révèle excédant l'adresse de boucle maximum, par exemple, 15 emmagasiné dans H2, n'est pas transférée au travers de la mémoire intermédiaire 53 (voir également la fig. 2), et est donc éliminée à la station reconnaissant l'adresse incorrecte. D'une manière similaire, les trames présentant des données incorrectes reconnues par l'unité de vérification de parité de multiplet H4 dans l'unité de commande d'en-tête ne sont pas transférées au travers de la mémoire intermédiaire 53 et sont éliminées.

Lorsque chaque trame passant sur la boucle arrive à une station sur le conducteur de boucle 17, la trame est transférée au travers des mémoires intermédiaire 51 et 52. Si la trame est désignée par l'en-tête pour être reçue par une autre station que celle recevant la trame, la trame est transférée à travers la mémoire intermédiaire 53 par la ligne 64 et à la porte de sortie 54 par la ligne 71 où elle est retransmise sur le conducteur de boucle 17 par le conducteur de sortie de trames 61. Si la station recevant la trame dans la mémoire intermédiaire 53 est occupée à la transmission sur la boucle à partir de sa mémoire intermédiaire d'envoi à cet instant, la trame est retardée dans la mémoire intermédiaire 53 jusqu'à ce que la transmission en cours de la trame depuis la mémoire intermédiaire d'envoi soit achevée. A la suite de la transmission de cette trame, la mémoire intermédiaire 53 transmet la trame emmagasinée sur le conducteur de boucle.

Comme décrit précédemment, l'unité d'interface de boucle de la figure 3 peut être actionnée par un commutateur manuel 87 afin de provoquer l'évitement d'une station sélectionnée par toutes les trames entrantes. L'unité d'interface de boucle peut également être actionnée par la défaillance de la station précédente pour provoquer l'évitement de cette station par le conditionnement des récepteurs de sélection d'entrée sous la commande de l'unité de détection d'horloge 71.

Cette opération est décrite plus en détail en se reportant à la figure 3.

Pendant la période d'horloge où une station ne transmet pas de multiplet de trame sur le conducteur de boucle au moyen de la porte de sortie, des trames nulles qui sont entièrement formées de bits zéros sont transférées autour de la boucle à chaque cycle d'horloge. La reconnaissance d'une trame nulle par une station quelconque constitue une indication que la boucle est disponible pour être utilisée.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention

**Revendications**

1. Système de transmission de données numériques par trames entre une pluralité de stations (1–16) connectées en série selon une configuration en boucle unidirectionnelle, chaque station pouvant transmettre des données à l'une quelconque des autres stations et les données transitant par toutes les stations intermédiaires; chaque station du système comprenant:

une première mémoire intermédiaire (57) pour emmagasiner les données en provenance de la station qui sont à transmettre sur la boucle à une autre station,
une première unité d'identification d'adresses (dans H3) pour identifier les données reçues sur la boucle et destinées à la station,
une deuxième mémoire intermédiaire (56) pour emmagasiner les données destinées à la station,
une troisième mémoire intermédiaire (53) pour emmagasiner temporairement les données reçues sur la boucle et destinées à une autre station, pendant tout le temps où la station est indisponible pour commander leur transmission sur la boucle,
un moyen de génération de signaux d'horloge (72) pour engendrer des impulsions d'horloge transmises vers la station suivante, en réponse aux impulsions d'horloge en provenance de la station précédente,
une unité de commande (59) pour commander la réception de données à destination de la station dans ladite deuxième mémoire intermédiaire, la transmission sur la boucle des données emmagasinés dans ladite troisième mémoire intermédiaire, et la transmission sur la boucle des données en provenance de la station emmagasinées dans ladite première mémoire intermédiaire,

ledit système étant caractérisé en ce que chaque station comprend:
une seconde unité d'identification d'adresse (dans H3) pour générer un signal en réponse à la correspondance entre l'adresse de la station

23 **0 003 493** 24

d'origine de la trame et l'adresse de la station
un compteur d'essais (100) commandé par ladite seconde unité d'identification d'adresse pour compter le nombre de fois qu'une trame est transmise sur la boucle par la station, les données emmagasinées dans ladite troisième mémoire intermédiaire étant annulées lorsque ledit compteur d'essais présente un contenu indiquant que lesdites données ont été transmises sur la boucle un nombre prédéterminé de fois,
un moyen de comparaison (H2) pour comparer à une adresse maximale, l'adresse de destination et l'adresse d'origine d'une trame reçue par la station, et générer un signal chaque fois que l'adresse de destination ou l'adresse d'origine est plus grande que ladite adresse maximale, et
un moyen d'identification de trame invalide (112) pour annuler toute trame contenant une adresse invalide, en réponse au signal fourni par ledit moyen de comparaison.

2. Système selon la revendication 1 caractérisé en ce que:

un bus principal (17) connecte toutes les stations en série, ledit bus comprenant une ligne d'horloge (81) et plusieurs lignes de données,
un premier bus alterné (18) connecte en série toutes les stations d'ordre pair et un deuxième bus alterné connecte en série toutes les stations d'ordre impair, chacun desdits bus comprenant une ligne d'horloge (82) et plusieurs lignes de données,
chaque station comporte;
un bus d'entrée (60),
un premier moyen de porte (73) pour connecter les lignes de données dudit bus principal (17) audit bus d'entrée,
un deuxième moyen de porte (74) pour connecter la ligne d'horloge dudit bus principal audit moyen de génération de signaux d'horloge (72),
un troisième moyen de porte (76) pour connecter les lignes de données dudit premier ou deuxième buis alterné (18) audit bus d'entrée,
un quatrième moyen de porte (75) pour connecter la ligne d'horloge dudit premier ou deuxième bus alterné audit moyen de génération de signaux d'horloge,
un moyen de détection d'horloge (88) pour conditionner lesdits premier et deuxième moyens de porte pendant le temps où des signaux d'horloge sont reçus sur ledit bus principal, et pour conditionner lesdits trosième et quatrième moyens de porte pendant le temps où aucun signal d'horloge n'est reçu sur ledit bus principal.

3. Système selon la revendication 2, caractérisé en ce que chaque station comprend en outre un ensemble de commutation à deux états (87) qui dans le premier état non activé, permet la connexion,

des lignes de données dudit bus principal (17) audit premier moyen de porte (73),
des lignes de données dudit premier ou deuxième bus alterné (18) audit troisième moyen de porte (76),

de la ligne d'horloge (81) dudit bus principal audit deuxième moyen de porte (74),
de la ligne d'horloge (82) dudit premier ou deuxième bus alterné audit quatrième moyen de porte (75)

dans le second état, activé permet la déconnexion dudit bus principal et dudit premier ou deuxième bus alterné desdits premier, deuxième, troisième et quatrième moyens de porte, et ainsi permet auxdits bus l'évitement de la station.

4. Système selon l'une quelconque des revendications précédentes caractérisé en ce que chaque station transmet des données à une autre station par le moyen de trames d'information comportant onze multiplets ayant la composition suivante:

une section d'en-tête de 2 multiplets, le premier multiplet contenant l'adresse de la station de destination et le deuxième multiplet contenant l'adresse de la station d'origine,
une section de données de 8 multiplets,
une section de vérification de redondance longitudinal de 1 multiplet pour la détection d'erreurs de parité.

5. Système selon la revendication 4 caractérisé en ce que toute station interceptant une trame d'information qui lui est destinée, renvoie une trame de réponse de 3 multiplets à la station d'origine ayant la composition suivante:

une section d'en-tête de 2 multiplets, le premier multiplet contenant l'adresse de la station de destination et le deuxième multiplet contenant l'adresse de la station d'origine,
une section de vérification de redondance longitudinale de un multiplet pour la détection d'erreurs de parité.

6. Système selon la revendication 5 caractérisé en ce que des trames nulles de un multiplet ne contenant que des bits «zéro» transitent sur la boucle en l'absence des trames d'information ou de réponse, et indiquent à la station qui les reçoit que la boucle est disponible pour la transmission des données.

7. Système selon la revendication 6 caractérisé en ce que chaque station comporte en outre:

un moyen d'identification de trame (112) pour identifier le type de trame reçue par la station, et
un moyen de génération de trames nulles pour transmettre une trame nulle sur la boucle durant chaque cycle pendant lequel aucun multiplet de trame d'information ou de trame de réponse n'est à transmettre par la station.

8. Système selon l'une quelconque des revendications précédentes, caractérisé en ce que chaque station est reliée à un processeur, et en ce que chaque station comprend en outre une unité d'interface (50) avec le processeur correspondant commandé par ladite unité de commande (59) pour transmettre des données en provenance dudit processeur vers ladite première mémoire intermédiaire (57) et destinées à un pro-

13

cesseur connecté à une autre station de la boucle,
recevoir des données de ladite deuxième mémoire intermédiaire (56) destinées audit processeur provenant d'un processeur connecté une autre station de la boucle.

9. Système selon l'une quelconque des revendications précédentes caractérisé en ce qu'il comprend en outre:

des moyens de détection (100) pour détecter la présence de données à l'entrée de la station, la transmission sur la boucle, des données emmagasinées dans ladite première mémoire intermédiaire (57) étant initiée à partir de la détection par lesdits moyens de détection de la première impulsion d'horloge qui suit l'impulsion d'horloge pendant laquelle aucune donnée n'a été détectée à l'entrée de la station.

**Claims**

1. Digital data transmission system for transmitting frames between a plurality of series-connected stations (1–16) in a closed-loop unidirectional configuration, each station being capable of transmitting data to any one of the other stations the data passing through all intervening stations, each station of the system comprising:
- a first buffer (57) for storing data originating from said station and to be stransmitted on the loop, to another station,
- first address recognition unit (in H3) for identifying the data received by the loop and addressed to the station,
- second buffer (56) for storing the data addressed to said station,
- a third buffer (53) for temporarily storing the data received on the loop and addressed to another station during the time said station is unavailable for controlling its transmission on the loop,
- clock generation means (72) for generating clock pulses for transmission to the succeeding station in response to the clock pulses originating from the preceding station,
- a control unit (59) for controlling the reception in said second buffer of data addressed to the station, the transmission, on the loop, of data stored in said third buffer, and the transmission, on the loop, of the data originating from the station and stored in said first buffer,

said system being characterised in that each station comprises:

- a second address recognition unit (in H3) for generating a signal in response to the correspondence between the address of the frame-originating station and the station address,
- a retry counter (100) controlled by said second address recognition unit for counting the number of times a frame is transmitted by the station onto the loop, the data stored in said third buffer being cancelled when said retry counter has a content indicating that said data has been transmitted to the loop a predetermined number of times,
- comparison means (H2) for comparing the destination address and the address of origin of a frame received by the station with a maximum address, and for generating a signal each time the destination address or the frame-originating address is greater than said maximum address, and
- identification means (112) for identifying an invalid frame to cancel any frame containing an invalid address in response to the signal supplied by said comparison means.

2. System according to claim 1, characterized in that:

- a main bus (17) connects each of said stations in series, said bus comprising a clock line (18) and several data lines,
- a first alternate bus (18) connects all even-numbered stations in series and a second alternate bus connects all odd-numbered stations in series, each of said buses comprising a lock line (82) and several data lines,

each station including:

- an input bus (60)
- first gating means (73) for connecting the data lines of said main bus (17) to said input bus,
- second gating means (74) for connecting the clock line of said main bus to said clock generation means (72),
- third gating means (76) for connecting the data lines of said first or second alternate bus (18) to said input bus,
- fourth gating means (75) for connecting the clock line of said first or second alternate bus to said clock generation means,
- clock detection means (88) for gating said first and second gating means during the time that clock pulses are received on said main bus, and for gating said third and fourth gating means during the time that no clock pulse in received on said main bus.

3. System according to claim 2, characterized in that each station furthermore includes a two-state switch (87) which:

in the first deactivated state connects:

- data lines of said main bus (17) to the first gating means (73),
- data lines of said first or second alternate bus (18) to said third gating means (76),
- the clock line (81) of said main bus to said second gating means (74),
- the clock line (82) of said first or second alternate bus to said fourth gating means (75),

in the second activated state, disconnects said main bus and said first or second alternate bus from said first, second, third and fourth gating means, thus causing said buses to bypass said station.

4. System according to any one of the preceding claims, characterized in that each station transmits data to another station by means of data frames comprising eleven bytes of the following format:

- a two-byte header section, the first byte containing the destination address and the second byte the originating station address,
- an eight-byte data section,
- a one-byte, longitudinal redundancy check section for detecting parity errors.

5. System according to claim 4, characterized in that each station receiving an information frame addressed to it, returns to the originating station a three-byte answer frame having the following format:

- a two-byte header section, the first byte containing the destination address of the station, the second byte containing the address of the originating station,
- a one-byte longitudinal redundancy check section for detecting parity errors.

6. System according to claim 5, characterized in that one-byte null frames containing only zero bits pass through the loop in the absence of data or answer frames and inform the receiving station that the loop is available for data transmission.

7. System according to claim 6, characterized in that each station furthermore comprises:

- frame identification means (112) for identifying the type of frame received by the station, and
- null frame generation means for transmitting a null frame to the loop during each cycle in which the station does not transmit any data frame byte or answer frame byte.

8. System according to any of the preceding claims, characterized in that each station is connected to a processor and that each station furthermore comprises an interface unit interfacting (50) with the corresponding processor and controlled by said control unit (59):

- for transmitting data from said processor to said first buffer (57) said data being addressed to a processor connected to another station of the loop,
- for receiving data from said second buffer (56) said data being addressed to said processor and originating from a processor connected to another station of the loop.

9. System according to any one of the preceding claims, characterized in that it furthermore comprises:

- detection means (100) for detecting the presence of data at the input of the station, whereby the transmission of the data stored in said first buffer (57) to the loop is initiated when said detection means detects the first clock pulse during which no data is detected at the station input.

**Patentansprüche**

1. Digitales Datenübertragungssystem zum Übertragen von numerischen Daten im Rahmen zwischen einer Vielzahl von in einer unidirektionellen Schleifenanordnung in Serie geschalteten Stationen (1-16), wobei jede Station Daten an eine beliebige andere Station senden kann und die Daten alle Zwischenstationen passieren, und wobei jede Station folgendes einschliesst:

- einen ersten Zwischenspeicher (57) zum Speichern der von der Station kommenden Daten, die auf der Schleife an eine andere Station zu übertragen sind,
- eine erste Adressenerkennungseinheit (in H3) zum Identifizieren der auf der Schleife ankommenden Daten, die für die Station bestimmt sind,
- einen zweiten Zwischenspeicher (56) zum Speichern der für die Station bestimmten Daten,
- einen dritten Zwischenspeicher (53) zum vorübergehenden Speichern der auf der Schleife erhaltenen und für eine andere Station bestimmten Daten, solange die Station zum Steuern der Übertragung derselben nicht verfügbar ist,
- Taktgebergenerierungsmittel (72) zum Generieren von an die nächste Station zu übertragenden Taktgeberimpulsen als Antwort auf die von der vorhergehenden Station ausgehenden Taktgeberimpulse,
- eine Steuereinheit (59) zum Steuern des Empfangs der für die Station bestimmten und im zweiten Zwischenspeicher gespeicherten Daten, der Übertragung auf der Schleife der im dritten Zwischenspeicher gespeicherten Daten, und der Übertragung auf der Schleife der von der Station ausgehenden und im ersten Zwischenspeicher gespeicherten Daten,

wobei das System dadurch gekennzeichnet ist, dass jede Station folgendes einschliesst:

- eine zweite Adressenerkennungseinheit (in H3) zum Erzeugen eines Signals als Antwort auf das Übereinstimmen zwischen der Adresse der Ursprungsstation des Rahmens und der Adresse der Station,
- einen von der zweiten Adressenerkennungseinheit gesteuerten Wiederholungszähler (100) um zu zählen, wieviele Male ein Rahmen von der Station auf die Schleife übertragen wird, wobei die im dritten Zwischenspeicher gespeicherten Daten annulliert werden, sobald der Inhalt des Wiederholungszählers anzeigt, dass die Daten eine bestimmte Anzahl Male auf die Schleife übertragen worden sind,
- Vergleichsmittel (H 2) zum Vergleich einer Maximaladresse mit der Bestimmungsadresse und der Ursprungsadresse eines von der Station empfangenen Rahmens und zur Erzeugung eines Signals wenn die Bestimmungsadresse oder die Ursprungsadresse grösser als die Maximaladresse ist, und
- Identifizierungsmittel (112) zum Identifizieren eines ungültigen Rahmens und zum Annullieren

29 0 003 493 30

jedes eine ungültige Adresse enthaltenden Rahmens als Antwort auf ein von diesen Vergleichsmitteln geliefertes Signal.

2. System gemäss Anspruch 1, dadurch gekennzeichnet, dass:

- ein Hauptübertragungsweg (17) alle Stationen in Serie verbindet, wobei der Übertragungsweg jeweils eine Taktgeberleitung (81) und mehrere Datenleitungen einschliesst,
- ein erster Alternativübertragungsweg (18) alle geradzahligen Stationen in Serie verbindet und ein zweiter Alternativübertragungsweg alle ungeradzahligen Stationen in Serie verbindet, wobei jeder Übertragungsweg eine Taktgeberleitung (82) und mehrere Datenleitungen einschliesst,

und dass jede Station folgende Einrichtungen enthält:

- einen Eingangsübertragungsweg (60),
- erste Schaltmittel (73) zum Anschliessen der Datenleitungen des genannten Hauptübertragungsweges an den Eingangsübertragungsweg (17),
- zweite Schaltmittel (74) zum Anschliessen der Taktgeberleitung des Hauptübertragungsweges an die Taktgebergenerierungsmittel (72),
- dritte Schaltmittel (76) zum Anschliessen der Datenleitungen des ersten oder zweiten Alternativübertragungsweges (18) an den Eingangsübertragungsweg,
- vierte Schaltmittel (75) zum Anschliessen der Taktgeberleitung des ersten oder zweiten Alternativübertragungsweges an die Taktgebergenerierungsmittel, und
- Taktgebererkennungsmittel (88) zum Aktivieren der ersten und zweiten Schaltmittel während die Taktgeberimpulse auf dem Hauptübertragungsweg empfangen werden, und zum Aktivieren der dritten und vierten Schaltmittel während kein Taktgeberimpuls auf dem Hauptübertragungsweg empfangen wird.

3. System nach Anspruch 2, dadurch gekennzeichnet, dass jede Station überdies mit einem Zwei-Status-Schalter (87) ausgerüstet ist, zum Anschalten im ersten, nichtaktiven Status:

- der Datenleitungen des Hauptübertragungsweges (17) an die ersten Schaltmittel (73),
- der Datenleitungen des ersten oder zweiten Alternativübertragungsweges (18) an die dritten Schaltmittel (76),
- der Taktgeberleitung (81) des Hauptübertragungsweges an die zweiten Schaltmittel (74),
- der Taktgeberleitung (82) der ersten oder Zweiten Alternativübertragungsweges an die vierten Schaltmittel (75),

und zum Abschalten im zweiten, aktiven Status:

- des Hauptübertragungsweges und des ersten oder zweiten Alternativübertragungsweges von den ersten, zweiten, dritten und vierten Schaltmitteln, so dass die genannten Übertragungswege die Station umgehen können.

4. System nach einem der vorhergehenden Ansprüche, dadurch gekennzeichnet, dass jede Station Daten an eine andere Station mit Hilfe von Datenrahmen überträgt, die aus elf Bytes wie folgt bestehen:

- Vorsatz aus zwei Bytes, wobei das erste Byte die Adresse der Bestimmungsstation und das zweite Byte die Adresse der Ursprungsstation enthält,
- Datenabschnitt aus acht Bytes,
- Longitudinalredundanzprüfabschnitt aus einem Byte zum Erkennen von Paritätsfehlern.

5. System nach Anspruch 4, dadurch gekennzeichnet, dass jede Station, die einen ihr bestimmten Datenrahmen empfängt, einen Antwortrahmen an die Ursprungsstation zurücksendet, der aus drei Bytes wie folgt besteht:

- Vorsatzabschnitt aus zwei Bytes, wobei das erste die Adresse der Bestimmungsstation und das zweite die Adresse der Ursprungsstation enthält,
- Longitudinalredundanzprüfabschnitt aus einem Byte zum Erkennen von Paritätsfehlern.

6. System nach Anspruch 5, dadurch gekennzeichnet, dass Nullrahmen, aus einen Byte, das Nur Nullbits enthält, auf der Schleife in Abwesenheit der Daten- oder Antwortrahmen übertragen werden und der sie empfangenden Station anzeigen, dass die Schleife für die Datenübertragung verfügbar ist.

7. System nach Anspruch 6, dadurch gekennzeichnet, dass jede Station überdies einschliesst:

- Rahmenerkennungsmittel (112) zum Identifizieren der Art des von der Station empfangenen Rahmens, und
- Nullrahmengenerierungsmittel zum Übertragen eines Nullrahmens auf die Schleife während eines jeden Zyklus bei dem kein Byte des Datenoder des Antwortrahmens von der Station übertragen werden muss.

8. System nach einem der vorhergehenden Ansprüche, dadurch gekennzeichnet, dass jede Station mit einem Prozessor verbunden ist, und dass jede Station überdies eine Schnittstelleneinheit (50) mit dem entsprechenden Prozessor besitzt, die von der genannten Steuereinheit (59) gesteuert wird, und zwar

- zum Übertragen an den ersten Zwischenspeicher (57) der vom Prozessor stammenden Daten, die für einen an eine andere Station der Schleife angeschlossenen Prozessor bestimmt sind,
- und zum Empfangen von aus dem zweiten Zwischenspeicher (56) kommenden Daten, die für diesen Prozessor bestimmt sind und von einem an eine andere Station der Schleife angeschlossenen Prozessor stammen.

9. System nach einem der vorhergehenden Ansprüche, dadurch gekennzeichnet, dass es weiterhin einschliesst:

- Erkennungsmittel (100) zum Erkennen von Daten am Eingang der Station, wobei das Übertragen der im ersten Zwischenspeicher (57) gespeicherten Daten auf die Schleife einsetzt, sobald die Erkennungsmittel den ersten Taktgeberimpuls erkennen, bei dem keine Daten am Stationseingang erkannt werden.

FIG. 1

FIG. 2

FIG. 3

FIG. 4

VERS/DE 92

VERS 112

VERS 57

VERS 57

FIG. 5

DE 51    DE 58  DE 100

VERS 54
VERS 53

DE 53

TRAME D'INFORMATION

FIG. 6

MULTIPLETS

EN TETE LRC

MULTIPLETS

FIG. 7

TRAME DE
REPONSE

TRAME
NULLE

MULTIPLET

FIG. 8

64

A1

A2

A3

A4

A5

71

DE 112

VERS 59

FIG. 9

(256 EMPLACEMENTS
LARGEUR : 2 MULTIPLETS)

BLOCS
COMM.
ENVOI

11111000 | SDCB_{15}

10000000 | SDCB_0

BLOCS
COMM.
RECEPT.

01111000 | RDCB_{15}

00001001 | RDCB_1

00000000 | RDCB_0

100

111 | POINTEUR DONNEES

XXXXX110 | COMPTE MULTIPLETS

4 MOTS RESERVES

001 | MOT COMM. TRANSF.

XXXXX000 | MOT COMM. PROCESSEUR

LES 3 DERNIERS BITS INDIQUENT UN MOT DANS LES BLOCS RDCB OU SDCB

LES 5 PREMIERS BITS IND. LES BLOCS RDCB OU SDCB

FIG. 12

25

0 003 493

FIG. 10

CYCLE $G_1$ $G_2$ $G_3$ $G_4$ $G_5$ $G_6$ $G_7$ $G_8$ $G_9$ $G_{10}$ $G_{11}$ $G_{12}$ $G_{13}$ $G_{14}$ $G_{15}$ $G_{16}$ $G_{17}$ $G_{18}$ $G_{19}$ $G_{20}$ $G_{21}$ $G_{22}$ $G_{23}$ $G_{24}$ $G_{25}$ $G_{26}$ $G_{27}$ $G_{28}$ $G_{29}$ $G_{30}$ $G_{31}$ $G_{32}$ $G_{33}$ $G_{34}$ $G_{35}$

ENTREE $A_1$ $A_2$ $A_3$ $A_4$ $A_5$ $A_6$ $A_7$ $A_8$ $A_9$ $A_{10}$ | $C_1$ $C_2$ $C_3$ $C_4$ $C_5$ $C_6$ $C_7$ $C_8$ $C_9$ $C_{10}$

SORTIE $A_1$ $A_2$ $A_3$ $A_4$ $A_5$ $A_6$ $A_7$ $A_8$ $A_9$ $A_{10}$ | $C_1$ $C_2$ $C_3$ $C_4$ $C_5$ $C_6$ $C_7$ $C_8$ $C_9$ $C_{10}$

ECR. | 0 0 0 1 2 3 4 5 6 7 8 9 9 9 9 9 9 9 9 10 11 12 13 14 15 0 1 2 2 2 2 2 2 2 2 2 2 |

LECT. | 0 0 0 1 2 3 4 5 6 7 8 9 9 9 9 9 9 9 9 9 9 9 9 9 9 9 9 9 10 11 12 13 14 15 0 1 2 2 2 2 |

SELECTION SORTIE $A_1$ $A_2$ $A_3$ $A_4$ $A_5$ $A_6$ $A_7$ $A_8$ $A_9$ $A_{10}$ , $B_1$ $B_2$ $B_3$ $B_4$ $B_5$ $B_6$ $B_7$ $B_8$ $B_9$ $B_{10}$ $C_1$ $C_2$ $C_3$ $C_4$ $C_5$ $C_6$ $C_7$ $C_8$ $C_9$ $C_{10}$

FIG. 11